# EUROPÄISCHE PATENTSCHRIFT

(11) **EP 2 661 380 B1**
(45) Veröffentlichungstag und Bekanntmachung des Hinweises auf die Patenterteilung: **15.07.2015**
(21) Anmeldenummer: 11797210.9
(22) Anmeldetag: 29.11.2011
(51) Int. Cl.: B60N 2/07, B60N 2/06

(54) **SITZSCHIENE FÜR EINEN KRAFTFAHRZEUGSITZ**
SEAT RAIL FOR A MOTOR VEHICLE SEAT
RAIL DE SIÈGE DESTINÉ À UN SIÈGE DE VÉHICULE AUTOMOBILE

(30) Priorität: 04.01.2011 DE 102011002441
(43) Veröffentlichungstag der Anmeldung: 13.11.2013
(73) Patentinhaber: Johnson Controls Metals and Mechanisms GmbH & Co. KG, 42699 Solingen (DE)
(72) Erfinder: SPECK, Axel, 42781 Haan-Gruiten (DE); URBAN, Daniel, 40229 Düsseldorf (DE); LANDSKRON, Robert, 40789 Monheim (DE)
(74) Vertreter: Finger, Catrin
(86) Internationale Anmeldenummer: PCT/EP2011/071267
(87) Internationale Veröffentlichungsnummer: WO 2012/093002

(56) Entgegenhaltungen:
- EP-A1- 1 701 861
- DE-B3-102006 022 947
- US-A1- 2006 158 002

## Beschreibung

Die Erfindung betrifft eine Sitzschiene für einen Kraftfahrzeugsitz, mit
- einer mit einem Kraftfahrzeug verbindbaren Unterschiene,
- einer an der Unterschiene mittels eines Spindelhalters verdrehfest angeordneten Spindel, wobei der Spindelhalter über ein sich durch eine Befestigungsöffnung an dem Spindelhalter sowie eine Befestigungsöffnung an der Unterschiene erstreckendes Befestigungsmittel an der Unterschiene festgelegt ist.

Sitzschienen der eingangs genannten Art sind in vielfältigen Ausgestaltungen aus dem Stand der Technik bekannt, beispielsweise aus der Druckschrift DE 10 2006 022 947 B3, die einen Längseinsteller für einen Kraftfahrzeugsitz offenbart, umfassend ein aus zwei relativ zueinander in Längsrichtung verschieblich angeordneten Sitzschienen gebildetes Schienenprofil, wobei beide Sitzschiene zueinander von einem Getriebe, einer Spindel sowie einer Spindelmutter bewegt werden. Die Sitzschiene des Standes der Technik dienen bei Kraftfahrzeugsitzen zur Anpassung der Sitzposition an die jeweiligen Fahrzeugnutzer, wobei die Kraftfahrzeugsitze in der Regel mit einer Oberschiene verbunden sind, welche gegenüber einer fahrzeugfest angeordneten Unterschiene verstellbar ist, so dass die Längsposition des Fahrzeugsitzes in dessen Einbaulage an die persönlichen Bedürfnisse anpassbar ist.

Moderne Kraftfahrzeugsitze weisen dabei vermehrt die Möglichkeit einer motorischen Verstellung des Kraftfahrzeugsitzes relativ gegenüber der Unterschiene auf, so dass der jeweilige Nutzer die Möglichkeit hat, die Sitzposition in besonders komfortabler Weise an seine Bedürfnisse anzupassen. Als besonders bewährt zur Verstellung haben sich dabei Antriebseinheiten, welche eine an einer Unterschiene angeordnete Spindel vorsehen, die zur Längsverstellung zur Aufnahme einer angetriebenen Spindelmutter ausgebildet ist. Das teilweise den Antriebseinheiten zugrunde liegende Funktionsprinzip erfordert es, die Spindel verdrehfest an der Unterschiene anzuordnen. Hierzu werden vorzugsweise Spindelhalter verwendet, welche die Spindel aufnehmen und mit der Unterschiene verbunden sind.

Zur Befestigung des Spindelhalters an der Unterschiene ist es dabei bekannt, sich sowohl durch den Spindelhalter wie auch die Unterschiene erstreckende Befestigungsschrauben zu verwenden, welche neben einer Befestigung des Spindelhalters an der Unterschiene auch eine Festlegung der Unterschiene am Kraftfahrzeug ermöglichen. Beim Anziehen derartiger Bodenverschraubungen kommt es jedoch aufgrund der Reibung zwischen der Befestigungsschrauben und dem Spindelhalter zu einer Übertragung des Anzugmoments auf den Spindelhalter, was zu einer Verschwenkung des Spindelhalters gegenüber der Unterschiene führen kann, infolge dessen sich die Spindel verbiegt. Eine Befestigung des Spindelhalters über bspw. eine Nietverbindung ist nicht dazu geeignet, um eine Verdrehung des Spindelhalters bei einem Anziehen einer Bodenverschraubung zu verhindern. Eine Verbiegung der Spindel kann neben einer Geräuschbelastung - in Abhängigkeit von dem Verbiegungsgrad - darüber hinaus zu Funktionsbeeinträchtigungen führen, welche unter Umständen auch zu einem Totalausfall der Längsverstellung führen können.

Der Erfindung liegt hiervon ausgehend die Aufgabe zugrunde, eine Sitzschiene mit einer Unterschiene bereitzustellen, an der eine Verdrehung des Spindelhalters, insbesondere im Falle einer sich durch den Spindelhalter erstreckenden Bodenverschraubung weitestgehend ausgeschlossen ist.

Die Erfindung löst die Aufgabe durch eine Sitzschiene mit den Merkmalen des Anspruchs 1. Vorteilhafte Weiterbildungen der Erfindung sind in den abhängigen Ansprüchen angegeben.

Kennzeichnend für die erfindungsgemäße Sitzschiene ist, dass die zur Befestigung des Spindelhalters an der Unterschiene und dem Spindelhalter vorgesehenen Befestigungsöffnungen und/oder das Befestigungsmittel in einem im Bereich der Befestigungsöffnungen angeordneten Verbindungsabschnitt einen von einer Kreisform abweichenden, vorzugsweise polygonalen Querschnitt aufweist. Gemäß der Erfindung weist der Spindelhalter sowie die Unterschiene in ihrer Einbaulage zueinander im Wesentlichen fluchtend verlaufende Befestigungsöffnungen auf, die zur Aufnahme eines die Befestigungsöffnungen durchdringenden Befestigungsmittels ausgebildet sind.

Durch die erfindungsgemäße Ausgestaltung der Befestigungsöffnungen und/oder des Befestigungsmittels mit einem von einer Kreisform abweichenden, vorzugsweise polygonalen Querschnitt, wird eine zuverlässige Verdrehsicherung des Spindelhalters gegenüber der Unterschiene erzielt. Im Falle eines sich durch eine Befestigungsschraube hervorgerufenen, auf den Spindelhalter wirkenden Moments wird wirksam eine Verlagerung des Spindelhalters verhindert, so dass schädigende, auf die Spindel wirkende Querkräfte, welche zu einer Durchbiegung der Spindel führen, ausgeschlossen werden können. Die Ausgestaltung des Verbindungsabschnitts und/oder der Befestigungsöffnungen mit einem von einer Kreisform abweichenden Querschnitt, insbesondere mit einem polygonalen Querschnitt, verhindert dabei besonders zuverlässig eine Verdrehung des Spindelhalters gegenüber der Unterschiene, nachdem hierdurch Relativbewegungen des Spindelhalters blockiert werden. Insbesondere eine polygonale Ausgestaltung des Querschnitts bei entsprechender Ausgestaltung der Befestigungsöffnung zeichnet sich dabei durch seine besonders hohe Verdrehsicherung des Spindelhalters gegenüber der Unterschiene aus.

Das sich durch die Befestigungsöffnungen an Spindelhalter und Unterschiene erstreckende Befestigungsmittel kann grundsätzlich in beliebiger Weise ausgebildet sein. Nach einer besonders vorteilhaften Ausgestaltung der Erfindung ist das Befestigungsmittel jedoch durch einen Verbindungsniet gebildet, dessen Querschnitt im Verbindungsabschnitt, d. h. der Bereich des Befestigungsmittels, der im montierten Zustand innerhalb der Befestigungsöffnungen angeordnet ist, an den Querschnitt der Befestigungsöffnungen angepasst ist. Der Verbindungsniet lässt sich besonders einfach anbringen und ermöglicht somit eine kostengünstige Herstellung der Sitzschiene. Insbesondere lässt sich der Verbindungsniet derart ausgestalten, dass er nur in einem geringen Bereich von einer Oberfläche der Unterschiene oder des Spindelhalters vorsteht, so dass durch den Verbindungsniet nur ein geringer Bauraum beansprucht wird.

Die konkrete Ausgestaltung des Verbindungsabschnitts mit einem von einer Kreisform abweichenden, vorzugsweise mit einem polygonalen Querschnitt kann grundsätzlich in beliebiger Weise erfolgen. Nach einer besonders vorteilhaften Ausgestaltung der Erfindung weist der Verbindungsabschnitt des Befestigungsmittels jedoch einen viereckigen, bevorzugt einen fünfeckigen, besonders bevorzugt einen sechseckigen Querschnitt auf. Befestigungsmittel mit derart ausgestalteten Verbindungsabschnitten lassen sich besonders einfach und kostengünstig herstellen und gewährleisten überdies über ihre Seitenflächen eine besonders zuverlässige Verdrehsicherung des Spindelhalters gegenüber der Unterschiene. Besonders bewährt hat sich dabei die Ausgestaltung eines fünfeckigen, insbesondere sechseckigen Querschnitts, wodurch eine besonders spielarme bzw. spielfreie Befestigung des Spindelhalters an der Sitzschiene möglich ist.

Wie bereits an obiger Stelle ausgeführt, ist die Ausgestaltung des Befestigungsmittels grundsätzlich frei wählbar. Nach einer besonders vorteilhaften Ausgestaltung der Erfindung ist vorgesehen, dass sich an den Verbindungsabschnitt des Befestigungsmittels ein Zapfen anschließt, der im montierten Zustand von einer dem Spindelhalter gegenüberliegenden Seite der Unterschiene vorsteht. Gemäß dieser Ausgestaltung der Erfindung ragt das Befestigungsmittel mit einem Abschnitt von der dem Spindelhalter gegenüberliegenden Seite- in der Regel der Unterseite der Unterschiene - vor. Dieser Abschnitt, d. h. der Zapfen kann zur Positionierung der Unterschiene am Kraftfahrzeug genutzt werden. Der Zapfen kann dabei als ergänzendes oder einziges Anordnungsmittel dienen, um eine besonders einfache und schnelle Positionierung der Sitzschiene am Kraftfahrzeugboden zu erreichen. Insbesondere in Verbindung mit weiteren Positionierhilfen und/oder einer Befestigungsschraube lässt sich somit auch eine Fehlmontage der Sitzschiene in besonders wirksamer Weise vermeiden.

Nach einer besonders vorteilhaften Ausgestaltung der Erfindung weist dabei der Zapfen des Befestigungsmittels eine sich zum freien Zapfenende verjüngende Form und/oder einen polygonalen Querschnitt auf. Ein sich verjüngender Querschnitt erleichtert die Montage der Sitzschiene am Fahrzeugboden und ein polygonaler Querschnitt ermöglicht eine Ausrichtung der Sitzschiene gegenüber dem Fahrzeugboden bzw. verhindert Verdrehbewegungen der Sitzschiene und steigert somit die Positioniergenauigkeit.

Grundsätzlich kann sich die zur Befestigung der Unterschiene an dem Kraftfahrzeug vorgesehene Befestigungsschraube in beliebiger Weise durch die Unterschiene erstrecken. Nach einer besonders vorteilhaften Ausgestaltung der Erfindung weisen der Spindelhalter und die Unterschiene jeweils eine zweite, im montierten Zustand fluchtend zueinander angeordnete Befestigungsöffnung auf, die zur Aufnahme einer Befestigungsschraube zur Festlegung der Sitzschiene an dem Kraftfahrzeug ausgebildet sind. Eine entsprechende Ausgestaltung gewährleistet, dass die Befestigungsschraube in einem Bereich mit der Unterschiene angeordnet ist, in dem durch die Materialdicke des Spindelhalters zusätzliches Material bereitsteht, welche insbesondere im Crashfall einem Ausreißen entgegenwirkt. Aufgrund der Verwendung eines erfindungsgemäßen Befestigungsmittels kann dabei zuverlässig ausgeschlossen werden, dass das beim Anziehen der Befestigungsschraube, aufgrund der Reibung auf den Spindelhalter wirkende Drehmoment zu einer Verdrehung des Spindelhalters führt, welche eine Beschädigung der Spindel zur Folge haben könnte.

Die Anordnung der Spindel an dem Spindelhalter erfolgt in Abhängigkeit vom Funktionsprinzip der Antriebseinheit entweder verdrehsicher oder in einer verdrehbaren Weise. Nach einer besonders vorteilhaften Ausgestaltung der Erfindung weist der Spindelhalter jedoch zur verdrehsicheren Aufnahme der Spindel einen U-förmigen Aufnahmeabschnitt auf. Ein entsprechend ausgestalteter Abschnitt zur Anordnung der Spindel ermöglicht es, diese in besonders zuverlässiger Weise verdrehsicher an dem Spindelhalter zu befestigen. Hierbei umschließen die freien Schenkel des U-förmigen Abschnitts die Spindel zumindest abschnittsweise und verhindern somit zuverlässig eine Verdrehung der Spindel gegenüber dem Spindelhalter. Besonders vorteilhafterweise ist dabei auch das Befestigungsmittel im Bereich des U-förmigen Aufnahmebereichs angeordnet. Hierdurch wird die Stabilität der Verbindung in ergänzender Weise gesteigert, nachdem der Spindelhalter eine besonders hohe Steifigkeit aufweist. Insbesondere im Crashfall kann somit besonders wirksam vorgebeugt werden, dass es zu einem Ausreißen des Spindelhalters gegenüber der Unterschiene kommt.

Nachfolgend werden Ausführungsbeispiele der Erfindung mit Bezug auf die Zeichnungen erläutert. In den Zeichnungen zeigen:
- Fig. 1: eine perspektivische Ansicht einer Sitzschiene;
- Fig. 2: eine perspektivische Ansicht der Sitzschiene von Fig. 1 ohne daran angeordneter Oberschiene;
- Fig. 3a: eine perspektivische Ansicht auf eine Unterseite der Unterschiene von Fig. 2;
- Fig. 3b: eine weitere perspektivische Ansicht auf die Unterschiene von Fig. 2 mit einem von der Unterseite vorstehenden Befestigungsmittel;
- Fig. 4a: eine perspektivische Ansicht eines Teilbereichs der Sitzschiene von Fig. 1;
- Fig. 4b: eine weitere perspektivische Ansicht eines Teilbereichs der Sitzschiene von Fig. 1 teilweise im Schnitt;
- Fig. 4c: eine Draufsicht auf den in Fig. 4a und 4b dargestellten Teilbereich der Sitzschiene von Fig. 1;
- Fig. 5a: eine erste Ausführungsform eines Befestigungsmittels mit polygonalem Verbindungsquerschnitt und
- Fig. 5b: eine zweite Ausführungsform eines Befestigungsmittels mit polygonalem Verbindungsquerschnitt und sich hieran anschließendem Zapfen.

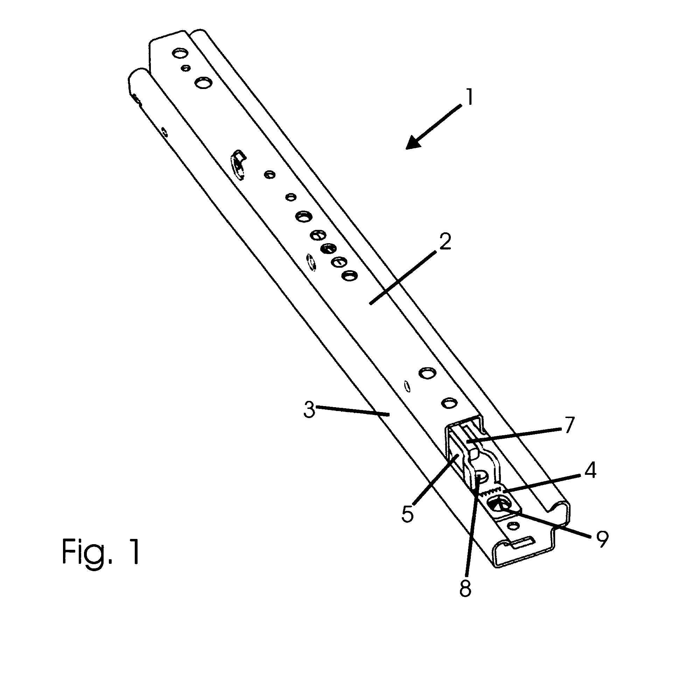

In Fig. 1 ist ein Ausführungsbeispiel einer Sitzschiene 1 mit einer mit einem Kraftfahrzeugsitz verbindbaren Oberschiene 2 und einer mit einem Fahrzeugboden verbindbaren Unterschiene 3 dargestellt.

Zur Längsverstellung des hier nicht dargestellten Kraftfahrzeugsitzes gegenüber dem ebenfalls nicht dargestellten Fahrzeugboden ist die Oberschiene 2 längsverschiebbar an der Unterschiene 3 gelagert, wobei an der Sitzunterschiene 3 zur komfortablen Längsverstellung über eine Verstelleinrichtung eine Spindel 6 über einen Spindelhalter 4 sowie eine Spindelaufnahme 11 verdrehsicher an der Unterschiene 3 gelagert ist.

Die Spindel 6 erlaubt es, im Zusammenwirken mit einer hier nicht dargestellten, angetriebenen Spindelmutter der Verstelleinrichtung die Oberschiene 2 motorisch gegenüber der Unterschiene 3 zu verstellen. Eine derartige Verstellbarkeit stellt eine Komfortsteigerung gegenüber einer manuellen Längsverstellung dar, für die zur Lagesicherung die an der Unterschiene 3 angeordneten Rastierungsmarken 13 vorgesehen sind, welche jedoch im Falle einer motorischen Verstellbarkeit ohne Funktion sind.

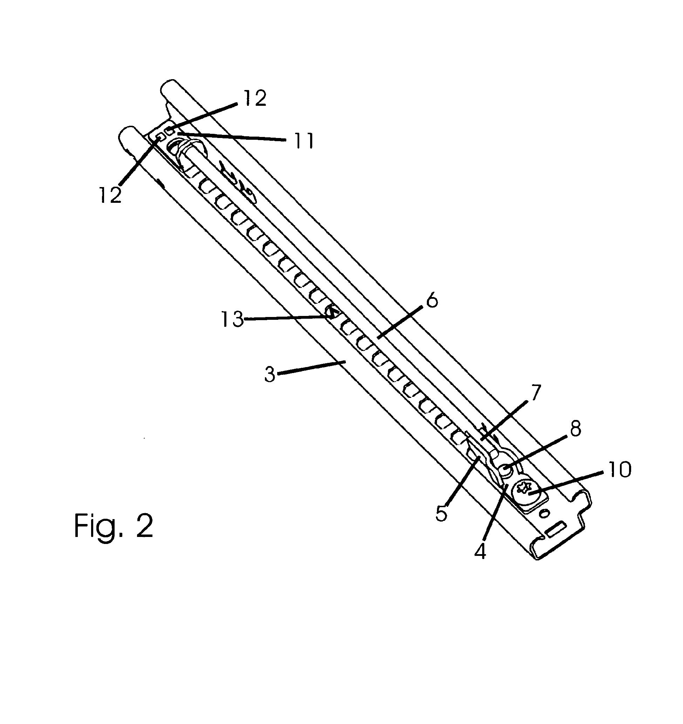

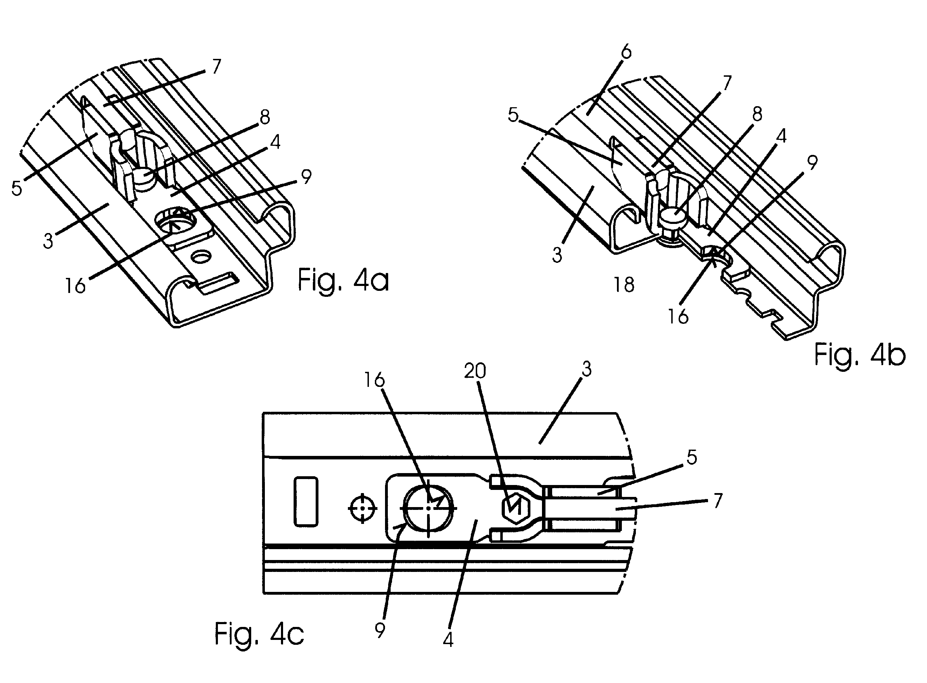

Einenends ist die Spindel 6 an einer Spindelaufnahme 11 befestigt, welche über Durchstellungen 12 verdrehsicher an der Unterschiene 3 befestigt ist. Anderenends ist die Spindel 6 über einen Spindelhalter 4 mit der Unterschiene 3 verbunden, wobei der Spindelhalter 4 eine erste Befestigungsöffnung 20 und eine zweite Befestigungsöffnung 9 und die Unterschiene 3 eine erste Befestigungsöffnung 17 und eine zweite Befestigungsöffnung 16 aufweisen (vgl. Fig. 2 - 4c).

In der montierten Lage des Spindelhalters 4 an der Unterschiene 3 sind die ersten Befestigungsöffnungen 20, 17 und die zweiten Befestigungsöffnungen 9, 16 fluchtend zueinander angeordnet. Die ersten Befestigungsöffnungen 20, 17 weisen einen polygonalen, nämlich sechseckigen Querschnitt auf und ermöglichen die Anordnung eines entsprechend ausgebildeten Befestigungsmittels 8, 8' in Form eines Verbindungsniets, welcher in einem Verbindungsabschnitt 18 einen entsprechenden sechseckigen Querschnitt aufweist. Der Befestigungsniet 8, 8' erstreckt sich durch die ersten Befestigungsöffnungen 20,17 und verhindert aufgrund des polygonalen Querschnitts des Verbindungsabschnitts 18 sowie der entsprechenden Ausgestaltung der Befestigungsöffnungen 20, 17 eine Verdrehung des Spindelhalters 4 gegenüber der Unterschiene 3.

Eine entsprechende Verdrehsicherung ist insbesondere dann vorteilhaft, wenn sich eine Befestigungsschraube 10, mittels derer die Sitzschiene 1 an einem Fahrzeugboden befestigt wird, durch die zweiten Befestigungsöffnungen 9, 16 erstreckt und mit dem Fahrzeugboden verschraubt wird, da beim Anzug der Befestigungsschraube 10, aufgrund der Reibung zwischen der Befestigungsschraube 10 und dem Spindelhalter 4, ein Drehmoment erzeugt wird, welches zu einem Verdrehen des Spindelhalters 4 führen kann, infolge dessen es zu einer Verbiegung der Spindel 6 kommen könnte, aus der wiederum eine Schwergängigkeit resultiert.

Zur verdrehsicheren Anordnung der Spindel 6 an dem Spindelhalter 4 weist der Spindelhalter 4 einen U-förmigen Aufnahmeabschnitt 5 auf, welcher einen abgeflachten Verbindungsabschnitt 7 der Spindel 6 mit den freien Schenkeln umgibt.

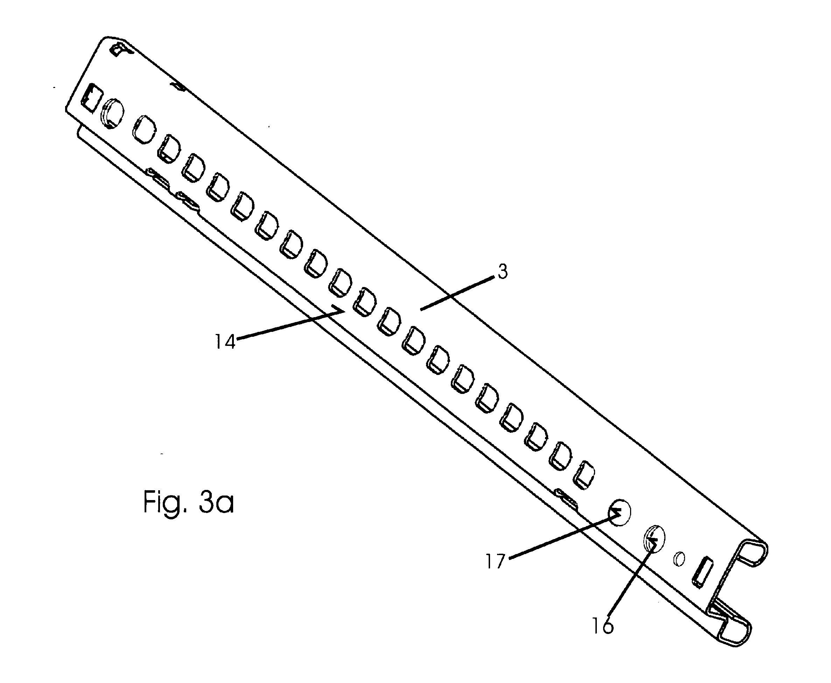

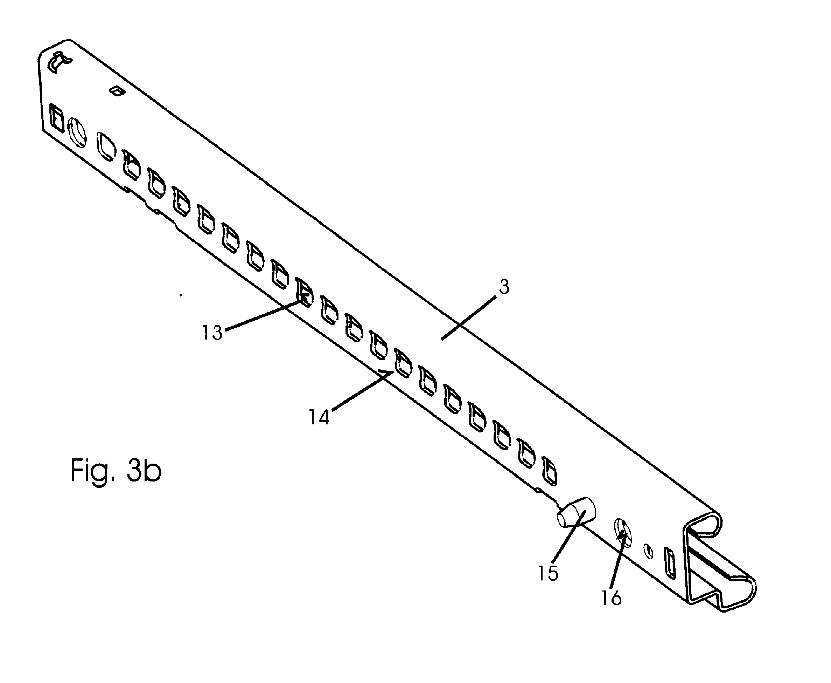

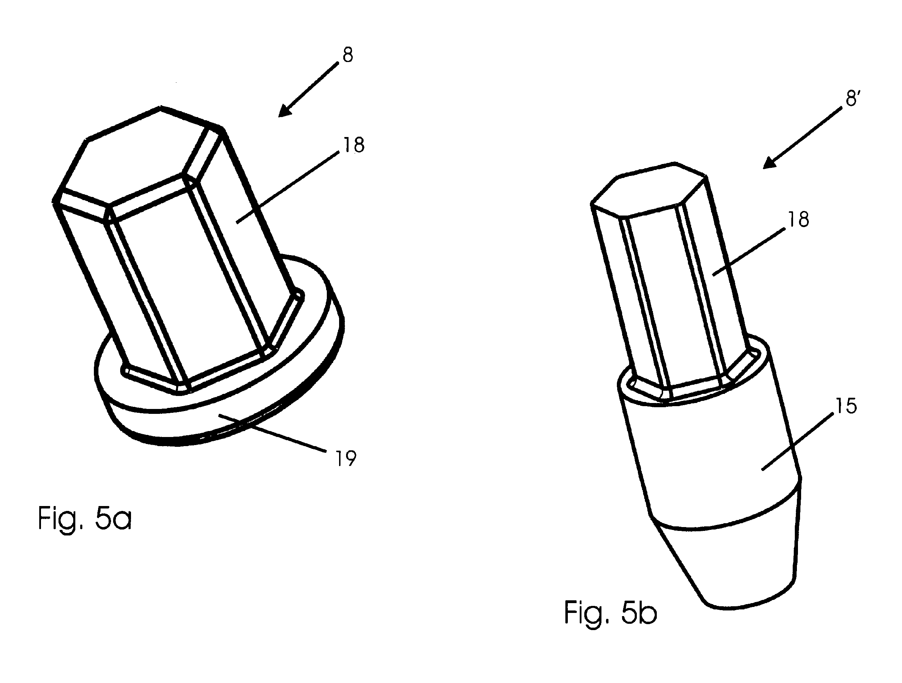

Zur Befestigung kann das als Niet 8, 8' ausgebildete Befestigungsmittel beliebig ausgestaltet sein, sofern über den Verbindungsabschnitt 18 gewährleistet ist, dass eine Verdrehsicherung vorliegt. Gemäß einer in Fig. 5a dargestellten Ausführungsform ist das Befestigungsmittel als Niet 8 ausgebildet, welches mit seinem Verbindungsabschnitt 18 in den ersten Befestigungsöffnungen 20, 17 von Spindelhalter 4 und Unterschiene 3 anliegt, wobei die Positionierung über den Nietkopf 19 gesichert ist. Eine zweite Ausführungsform eines Befestigungsmittels ist in Fig. 5b dargestellt, wobei der Befestigungsniet 8' einen sich an den Verbindungsabschnitt 18 anschließenden Zapfen 15 mit einem sich verjüngenden Querschnitt aufweist. Der Zapfen 15 steht in der Einbaulage, wie insbesondere aus Fig. 3b ersichtlich, von der Unterseite 14 der Unterschiene 3 vor und ermöglicht es, den Niet 8' neben einer Verdrehsicherung auch zur Positionierung der Sitzschiene 1 am Fahrzeugboden zu verwenden. Der sich im Endbereich verjüngende Querschnitt des Zapfens 15 dient dabei als Montagehilfe.

## Patentansprüche

1. Sitzschiene für einen Kraftfahrzeugsitz, mit
- einer mit einem Kraftfahrzeug verbindbaren Unterschiene,
- einer an der Unterschiene mittels eines Spindelhalters verdrehfest angeordneten Spindel, wobei der Spindelhalter über ein sich durch eine Befestigungsöffnung an dem Spindelhalter sowie eine Befestigungsöffnung an der Unterschiene erstreckendes Befestigungsmittel an der Unterschiene festgelegt ist,
**dadurch gekennzeichnet, dass** die Befestigungsöffnungen (17, 20) und/oder das Befestigungsmittel (8, 8') in einem im Bereich der Befestigungsöffnungen (17, 20) angeordneten Verbindungsabschnitt (18) einen von einer Kreisform abweichenden, vorzugsweise polygonalen Querschnitt aufweisen.

2. Sitzschiene nach Anspruch 1, **dadurch gekennzeichnet, dass** das Befestigungsmittel durch einen Verbindungsniet (8, 8') gebildet ist.

3. Sitzschiene nach Anspruch 1 oder 2, **dadurch gekennzeichnet, dass** der Verbindungsabschnitt (18) einen viereckigen, bevorzugt einen fünfeckigen, besonders bevorzugt einen sechseckigen Querschnitt aufweist.

4. Sitzschiene nach einem der vorher genannten Ansprüche, **dadurch gekennzeichnet, dass** sich an den Verbindungsabschnitt (18) des Befestigungsmittels (8') ein von der dem Spindelhalter (4) gegenüberliegenden Seite der Unterschiene (3) vorstehender Zapfen (15) anschließt.

5. Sitzschiene nach einem der vorherigen Ansprüche, **dadurch gekennzeichnet, dass** der Zapfen (15) eine sich zum freien Zapfenende verjüngende Form und/oder einen polygonalen Querschnitt aufweist.

6. Sitzschiene nach einem der vorherigen Ansprüche, **dadurch gekennzeichnet, dass** der Spindelhalter (4) und die Unterschiene (3) jeweils eine zweite, korrespondierend zueinander angeordnete Befestigungsöffnung (9, 16) aufweisen, die zur Aufnahme einer Befestigungsschraube (10) zur Festlegung der Sitzschiene (1) an dem Fahrzeug ausgebildet sind.

7. Sitzschiene nach einem der vorherigen Ansprüche, **dadurch gekennzeichnet, dass** der Spindelhalter (4) zur verdrehsicheren Aufnahme der Spindel (6) einen u-förmigen Aufnahmeabschnitt (5) aufweist.

8. Sitzschiene nach einem der vorherigen Ansprüche, **dadurch gekennzeichnet, dass** das Befestigungsmittel (8, 8') im Bereich des u-förmigen Aufnahmeabschnittes (5) angeordnet ist.

## Claims

1. A seat rail for a motor vehicle seat, having
- a lower rail, which can be connected to a motor vehicle,
- a spindle, which is arranged on the lower rail in a rotationally fixed manner by means of a spindle retainer, wherein the spindle retainer is fixed to the lower rail via a fastening element extending through a fastening opening in the spindle retainer and a fastening opening in the lower rail,
**characterized in that** the fastening openings (17, 20) and/or the fastening element (8, 8') have a cross-section deviating from a circular shape, preferably a polygonal cross-section, in a connection section (18), arranged in the region of the fastening openings (17, 20).

2. The seat rail according to claim 1, **characterized in that** the fastening element is formed by a connection rivet (8, 8').

3. The seat rail according to claim 1 or 2, **characterized in that** the connection section (18) has a quadrangular, preferably a pentagonal, particularly preferably a hexagonal cross-section.

4. The seat rail according to one of the preceding claims, **characterized in that** a peg (15) projecting from the side of the lower rail (3) opposite the spindle retainer (4) is attached to the connection section (18) of the fastening element (8').

5. The seat rail according to one of the preceding claims, **characterized in that** the peg (15) has a shape tapering toward the free end of the peg and/or a polygonal cross-section.

6. The seat rail according to one of the preceding claims, **characterized in that** the spindle retainer (4) and the lower rail (3) each have a second fastening opening (9, 16) arranged corresponding to each other, which are designed for receiving a fastening bolt (10) for fixing the seat rail (1) to the vehicle.

7. The seat rail according to one of the preceding claims, **characterized in that** for receiving the spindle (6) locked against rotation, the spindle retainer (4) has a U-shaped receiving section (5).

8. The seat rail according to one of the preceding claims, **characterized in that** the fastening element (8, 8') is arranged in the region of the U-shaped receiving section (5).

## Revendications

1. Rail de siège destiné à un siège de véhicule automobile, comprenant
- un rail inférieur pouvant être connecté à un véhicule automobile,
- une broche disposée de manière solidaire en rotation sur le rail inférieur au moyen d'un dispositif de retenue de broche, le dispositif de retenue de broche étant fixé au rail inférieur par le biais d'un moyen de fixation s'étendant à travers une ouverture de fixation sur le dispositif de retenue de broche et à travers une ouverture de fixation sur le rail inférieur,
**caractérisé en ce que** les ouvertures de fixation (17, 20) et/ou le moyen de fixation (8, 8') présentent, dans une portion de connexion (18) disposée dans la région des ouvertures de fixation (17, 20), une section transversale s'écartant d'une forme circulaire, de préférence polygonale.

2. Rail de siège selon la revendication 1, **caractérisé en ce que** le moyen de fixation est formé par un rivet de connexion (8, 8').

3. Rail de siège selon la revendication 1 ou 2, **caractérisé en ce que** la portion de connexion (18) présente une section transversale quadrilatérale, de préférence pentagonale, particulièrement préférablement hexagonale.

4. Rail de siège selon l'une quelconque des revendications précédentes, **caractérisé en ce qu'**un tourillon (15) faisant saillie depuis le côté du rail inférieur (3) opposé au dispositif de retenue de broche (4) se raccorde à la portion de connexion (18) du moyen de fixation (8').

5. Rail de siège selon l'une quelconque des revendications précédentes, **caractérisé en ce que** le tourillon (15) présente une forme se rétrécissant jusqu'à l'extrémité libre du tourillon et/ou une section transversale polygonale.

6. Rail de siège selon l'une quelconque des revendications précédentes, **caractérisé en ce que** le dispositif de retenue de broche (4) et le rail inférieur (3) présentent chacun une deuxième ouverture de fixation (9, 16), lesquelles ouvertures sont disposées de manière à se correspondre l'une à l'autre et sont réalisées pour recevoir une vis de fixation (10) pour la fixation du rail de siège (1) sur le véhicule.

7. Rail de siège selon l'une quelconque des revendications précédentes, **caractérisé en ce que** le dispositif de retenue de broche (4) présente, pour recevoir de manière solidaire en rotation la broche (6), une portion de réception en forme de U (5) .

8. Rail de siège selon l'une quelconque des revendications précédentes, **caractérisé en ce que** le moyen de fixation (8, 8') est disposé dans la région de la portion de réception en forme de U (5) .
